Europäisches Patentamt

European Patent Office

Office européen des brevets

(11) Veröffentlichungsnummer: **0 074 509**
**A2**

(12) **EUROPÄISCHE PATENTANMELDUNG**

(21) Anmeldenummer: 82107590.0

(22) Anmeldetag: 19.08.82

(51) Int. Cl.³: **B 01 D 1/26**
**B 01 D 1/10**
**//A23L2/10**

(30) Priorität: 15.09.81 DE 3136476

(43) Veröffentlichungstag der Anmeldung:
23.03.83 Patentblatt 83/12

(84) Benannte Vertragsstaaten:
CH FR GB IT LI NL

(71) Anmelder: Wiegand Karlsruhe GmbH
Einsteinstrasse 9-15
D-7505 Ettlingen(DE)

(72) Erfinder: Toran, Josef
Burgunderplatz 2
D-7500 Karlsruhe 1(DE)

(72) Erfinder: Frank, Erich
Kriegsstrasse 182
D-7500 Karlsruhe 1(DE)

(74) Vertreter: Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22
D-8000 München 86(DE)

(54) Eindampfanlage.

(57) Eindampfanlage mit wenigstens einer Verdampfungsstufe und einer Kondensationsstufe oder mit wenigstens
zwei Verdampfungsstufen, die jeweils einen Mantel aufweisen, der wenigstens ein von einem einzudampfenden Produkt bzw. von einem Kühlmittel durchströmtes Rohr
umschließt und mit wenigstens einer Abscheidestufe zur
Trennung des aus einer Verdampfungsstufe austretenden
Produkt-Brüden-Gemisches in eine flüssige und eine dampfförmige Phase, dadurch gekennzeichnet, daß wenigstens
eine Abscheidestufe innerhalb des äußeren Mantels einer
Verdampfungsstufe bzw. Kondensationsstufe angeordnet
ist.

FIG.1

## Eindampfanlage

Die Erfindung betrifft eine Eindampfanlage nach dem Oberbegriff des Anspruchs 1.

Bei bekannten Eindampfanlagen dieser Art sind deren Abscheidestufen gesonderte Bauelemente, also in gesonderten Gehäusen untergebracht. Dies erfordert einen erheblichen Bau- und Montageaufwand.

Aufgabe der Erfindung ist es, die Abscheidestufe bzw. die Abscheidestufen in die Anlage zu integrieren.

Die Lösung dieser Aufgabe ist im Kennzeichen des Anspruchs 1 angegeben.

Da gemäß der Erfindung die Abscheidestufe mit der Verdampfungsstufe bzw. der Kondensationsstufe baulich vereinigt ist, werden der Bauaufwand und der Montageaufwand geringer.

In einer mehrstufigen Anlage wird die einer Verdampfungsstufe zugeordnete Abscheidestufe bevorzugt in der nachfolgenden Verdampfungsstufe bzw. der nachfolgenden Kondensationsstufe untergebracht, was die Anzahl der Verbindungsleitungen zwischen den Stufen mindert.

Vorteilhafte Ausgestaltungen der Erfindung sind in den Unteransprüchen angegeben.

Die Erfindung wird im folgenden an Ausführungsbeispielen unter Hinweis auf die beigefügten Zeichnungen beschrieben:

Fig. 1 zeigt eine direkt beheizte, dreistufige Vakuum-Fallstrom-Eindampfanlage mit Oberflächenkondensation in Gleichstromschaltung,

Fig. 2 zeigt mit mehr Einzelheiten als in Fig. 1 eine Verdampfungsstufe,

Fig. 3 zeigt die Ausbildung einer Verdampfungsstufe nach Fig. 2 zur kombinierten Stoßkraft- und Zentrifugal-Abscheidung mit dem in ihr vorgesehenen Abscheider,

Fig. 4 zeigt die Ausbildung eines Zentrifugalabscheiders in einer Verdampfungsstufe nach Fig. 2,

Fig. 5 zeigt eine dreistufige Vakuum-Fallstrom-Eindampfanlage mit einer Einrichtung zur Aromagewinnung aus den Brüden der ersten Verdampfungsstufe in Gleichstromschaltung.

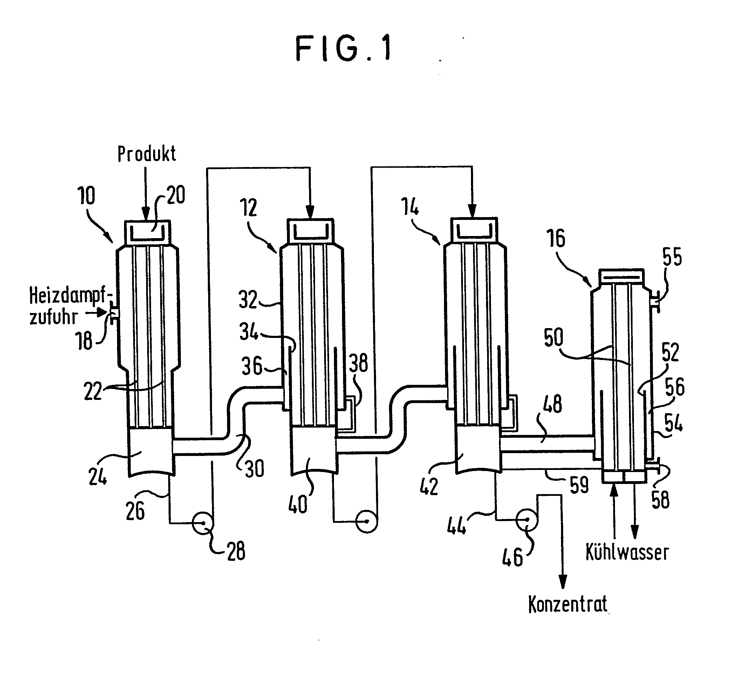

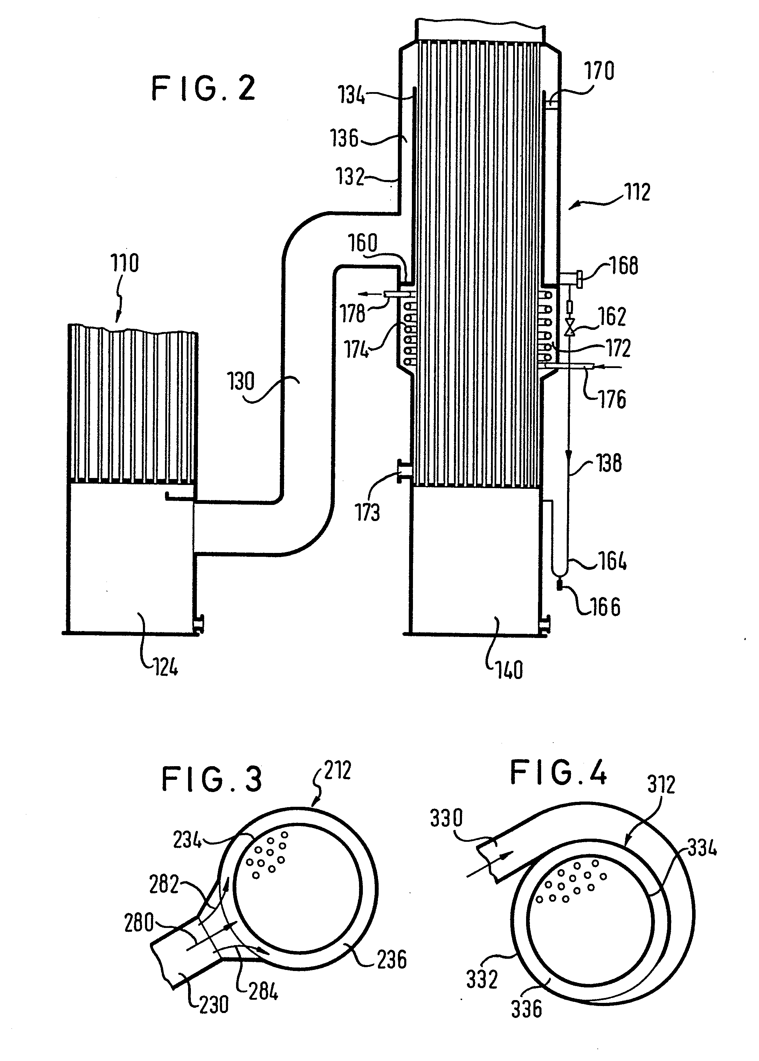

Die Eindampfanlage nach Fig. 1 weist drei Verdampfungsstufen 10, 12, 14 und eine Kondensationsstufe 16 auf. Die erste Verdampfungsstufe 10 wird durch Heizdampf beheizt, der durch einen Stutzen 18 zugeführt und in bekannter Weise abgeführt wird. Das einzudampfende Produkt wird dem Kopf 20 der ersten Verdampfungsstufe 10 zugegeben und fließt durch
ein Rohrbündel 22 nach unten in einen Raum 24, aus dem die
Flüssigphase durch eine Leitung 26 abgezogen und über eine
Pumpe 28 der nächsten Verdampfungsstufe 12 zugeführt wird.
Die Verdampfungsstufen 12 und 14 arbeiten grundsätzlich wie
die Verdampfungsstufe 10, so daß sich eine nähere Beschreibung erübrigt. Aus dem Raum 24 wird über eine Leitung 30
Brüden der zweiten Verdampfungsstufe 12 zu deren Heizung
zugeführt. Innerhalb des Mantels 32 der zweiten Verdampfungsstufe 12 ist eine Ringwand 34 angeordnet, die zwischen sich
und dem Mantel 32 einen Ringraum 36 begrenzt. Dieser Ringraum
36   ist oben offen und unten geschlossen. Er dient zur Aufnahme der Abscheidestufe. Die in dieser Abscheidestufe entstehende Flüssigphase wird durch die Leitung 38 (Näheres
siehe Fig. 2) in den Raum 40 abgeführt.

Die dritte Verdampfungsstufe 14 ist wie die zweite Verdampfungsstufe aufgebaut, nur wird dort aus dem Raum 42
das eingedampfte Produkt über eine Leitung 44 und eine Pumpe
46 abgeführt. Der Brüden gelangt durch eine Leitung 48 in
den durch einen Stutzen 55 zu evakuierenden Kondensator 16,
der von Kühlwasserrohren 50 durchsetzt ist. Auch dieser Kondensator 16 enthält, wie die Verdampfungsstufen 12 und 14,
eine Ringwand 52, die zusammen mit dem Mantel 54 der Kondensationsstufe 16 einen Abscheideraum 56 begrenzt. Das Kondensat des Brüdens wird aus der Kondensationsstufe 16 über
einen Stutzen 58 abgeführt. Das in dieser Kondensationsstufe
16 abgeschiedene Konzentrat wird durch eine Leitung 59
in den Raum 42 zurückgeführt.

In Fig. 2 ist das untere Ende einer ersten Verdampfungsstufe
110 dargestellt, die mit einer nachfolgenden zweiten Verdampfungsstufe 112 verbunden ist. Der Raum 124 der ersten
Verdampfungsstufe 110 ist über eine Leitung 130 mit einem
Abscheideraum 136 in der zweiten Verdampfungsstufe 112 verbunden. Dieser Abscheideraum 136 ist durch den Mantel 132 der zweiten Verdampfungsstufe und eine innerhalb des Mantels
132 angeordnete Ringwand 134 begrenzt. Nach unten hin ist
der Abscheideraum durch einen Ringboden 160 geschlossen.
Die sich in dem Abscheideraum 136 sammelnde flüssige Phase
wird durch eine Leitung 138 in den Raum 140 abgeführt. In
der Leitung 138 befinden sich ein Ventil 162 und ein Knie
164 mit einem Abzugshahn 166. Der Stand der flüssigen Phase
in dem Abscheideraum 136 ist durch ein Schauglas 168 zu ermitteln.

Das obere Ende der Ringwand 134 ist durch Stege 170 mit dem
Mantel 132 abgestützt.

Unterhalb des Abscheideraums 136 ist eine Vorwärmkammer 172
für das einzudampfende Produkt angeordnet. Die Vorwärmkammer
wird durch den Brüden beheizt, der durch die Leitung 130 zugeführt wird. Innerhalb der Vorwärmkammer befindet sich eine
Rohrschlange 174, der das einzudampfende Produkt durch einen
Stutzen 176 zugeführt wird und aus der das Produkt durch
einen Stutzen 178 abgeführt wird. Die aus der Leitung 130 kommenden Brüden
kondensieren an den Heizrohren der Verdampfungsstufe 112 und werden aus der
Verdampfungsstufe 112 durch einen Stutzen 173 abgeführt.
Im übrigen entspricht das Zusammenwirken der Verdampfungsstufen 110 und 112 sowie ihr Aufbau dem der Verdampfungsstufen 10 und 12 nach Fig. 1.

Fig. 3 zeigt im Querschnitt eine Verdampfungsstufe 212, die
der Verdampfungsstufe 112 entspricht, bei der jedoch der
Ringraum 236 als kombinierter Zentrifugal- und Stoßkraft-
Abscheider ausgebildet ist. Der durch die Leitung 230 zugeführte Brüden trifft in Pfeilrichtung 280 auf die Ringwand
234 und wird in Richtung der Pfeile 282, 284 in den Ringraum 236 gelenkt. Das Auftreffen in Richtung des Pfeils
280 führt zu einer Stoßkraftabscheidung, die Umlenkung in
Richtung der Pfeile 282 und 284 zu einer Zentrifugalabscheidung.

Bei der Ausführungsform nach Fig. 4 wird durch eine spiralig verlaufende Leitung 330 der Verdampfungsstufe 312 Brüden zugeführt. Diese Leitung 330 verengt sich und mündet tangential in dem Ringraum 336 zwischen dem Mantel 332 und der Ringwand 334, so daß man eine echte Zentrifugalabscheidung erhält.

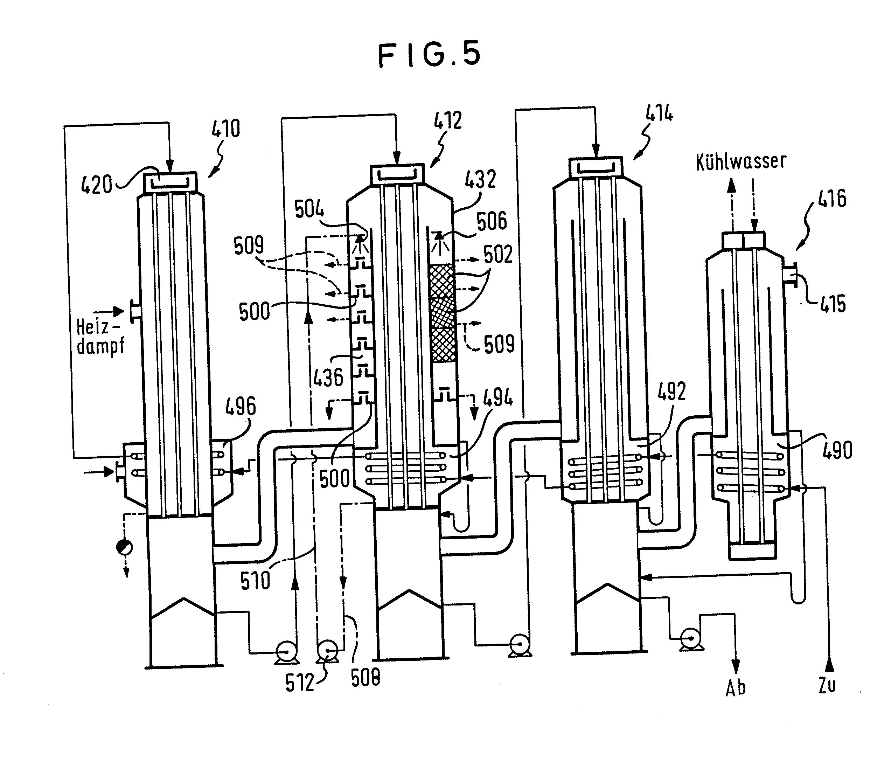

Die Eindampfanlage nach Fig. 5 weist, wie die Eindampfanlage nach Fig. 1, drei Verdampfungsstufen 410, 412 und 414 sowie eine Kondensationsstufe 416 auf.

Das einzudampfende Produkt wird durch Vorwärmkammern 490, 492, 494 und 496 der Kondensationsstufe 416 und der Verdampfungsstufen 410, 412 und 414 geleitet, bevor es dem Kopf 420 der ersten Verdampfungsstufe zugeführt wird. Der durch einen Stutzen 415 zu evakuierenden Kondensationsstufe 416 wird das Kühlmittel von oben zugeführt und von oben abgeführt. Im übrigen entspricht der Aufbau demjenigen nach Fig. 1, bis auf die spezielle Ausbildung der zweiten Verdampfungsstufe 412. In dem Abscheideraum 436 der zweiten Verdampfungsstufe sind Austauschböden 500 (links dargestellt) bzw. Füllkörperanordnungen 502 (rechts dargestellt) vorgesehen. Oberhalb der Austauschböden 500 bzw. der Füllkörperanordnungen 502 sind Düsen 504, 506 vorgesehen, die über eine Leitung 508, 510 über eine Pumpe 512 mit derjenigen flüssigen Phase beschickt werden, die sich im Bodenbereich der Vorwärmkammer 494 sammelt. Oberhalb der Austauschböden 500 bzw. der Füllkörperanordnungen 502 sind Abführungsleitungen 509 vorgesehen, die den Mantel 432 der Verdampfungsstufe 412 durchsetzen.

Die Austauschböden 500 bzw. die Füllkörperanordnungen 502 sind besonders zweckmäßig, wenn die Eindampfanlage zum Eindampfen von Obst- oder Fruchtsäften verwendet wird. Solchen Säften werden häufig beim Eindampfen flüchtige Aromastoffe entzogen. Aus den Abführungsleitungen 509 sind Aromakonzentrate abzuziehen. Aus dem oberen Bereich der Verdampfungsstufe werden die leichter siedenden Aromakonzentrate abgesogen, aus dem unteren Teil die schwerer siedenden Aromakonzentrate. Die verbleibende Flüssigkeit (Lutterwasser genannt) wird abgeführt.

Die integrierten Abscheideräume sind auch vorteilhaft bei einer Eindampfanlage, deren vom Produkt nacheinander durchströmten Verdampfkörper heiz- und brüdenseitig parallel geschaltet sind, also gemeinsam eine Verdampfungsstufe bilden.

Ebenso sind sie auch vorteilhaft für geteilte Verdampfungsstufen, wenn also z.B. bei einer Gleichstromschaltung bei geteilter, letzter Verdampfungsstufe der vom Produkt zuletzt durchströmte Verdampfkörper nicht mit dem Brüden der vorhergehenden Verdampfungsstufe, sondern mit Heizdampf oder Brüden von höherer Temperatur beheizt wird.

Was insoweit für Gleichstromschaltungen gilt, gilt hier auch für Gegenstrom- oder Teilgegenstromschaltungen.

P a t e n t a n s p r ü c h e

1. Eindampfanlage mit wenigstens einer Verdampfungsstufe
   und einer Kondensationsstufe oder mit wenigstens zwei
   Verdampfungsstufen, die jeweils einen Mantel aufweisen, der wenigstens ein von einem einzudampfenden Produkt bzw. von einem Kühlmittel durchströmtes Rohr umschließt und mit wenigstens einer Abscheidestufe zur
   Trennung des aus einer Verdampfungsstufe austretenden
   Produkt-Brüden-Gemisches in eine flüssige und eine
   dampfförmige Phase, dadurch gekennzeichnet, daß wenigstens eine Abscheidestufe innerhalb des äußeren Mantels
   (32, 54; 132, 332, 432) einer Verdampfungsstufe (12, 14,
   112, 212, 312, 412, 414) bzw. Kondensationsstufe (16,
   416) angeordnet ist.

2. Anlage nach Anspruch 1, dadurch gekennzeichnet, daß die
   Abscheidestufe in einem Ringraum (36, 56, 136, 236, 336,
   436) untergebracht ist, der durch den äußeren Mantel (32,
   54, 132, 332, 432) der Verdampfungsstufe (12, 14, 112,
   212, 312, 412, 414) bzw. der Kondensationsstufe (16,
   416) und durch eine in diesem Mantel (32, 54, 132, 332,
   432) angeordnete Ringwand (34, 52, 134, 234, 334) begrenzt ist.

3. Anlage nach Anspruch 2, dadurch gekennzeichnet, daß der
   Ringraum (36, 56, 136, 236, 336, 436) oben offen und
   unten geschlossen ist.

4. Anlage nach einem der Ansprüche 1 bis 3, dadurch gekennzeichnet, daß die Abscheidestufe in der heizseitig nachfolgenden Verdampfungsstufe bzw. Kondensationsstufe untergebracht ist.

5. Anlage nach einem der vorgenannten Ansprüche, dadurch ge-.

kennzeichnet, daß die Abscheidestufe als Zentrifugal-
und/oder Stoßkraft-Abscheidestufe ausgebildet ist (Fig.
3 und 4).

6. Anlage nach einem der vorgenannten Ansprüche, dadurch
gekennzeichnet, daß der Mantel (32, 54, 132, 332, 432)
auf diametral einander gegenüberliegenden Seiten eine
Eintrittsöffnung für den Brüden und eine Austrittsöffnung für die flüssige Phase aufweist.

7. Anlage nach einem der vorgenannten Ansprüche, dadurch gekennzeichnet, daß die Verdampfungsstufe (12, 14, 112,
212, 312, 412, 414) als Fallstrom-Verdampfer ausgebildet ist.

8. Anlage nach einem der vorgenannten Ansprüche, dadurch gekennzeichnet, daß in der Verdampfungsstufe (112, 412, 414)
und/oder der Kondensationsstufe (416) unterhalb der Abscheidestufe eine Vorwärmkammer (172, 490, 492, 494) für
das einzudampfende Produkt angeordnet ist.

9. Anlage nach einem der vorgenannten Ansprüche, dadurch gekennzeichnet, daß die Abscheidestufe wenigstens
einen Austauschboden (500) und/oder eine Füllkörperanordnung
(502) und/oder einen Düsenkranz (5o4, 5o6) aufweist.

# FIG.1

# FIG. 2

# FIG. 3

# FIG. 4

# FIG.5

Kühlwasser

Heizdampf

Ab    Zu